(19) Europäisches Patentamt
European Patent Office
Office européen des brevets

(11) **EP 1 589 058 B1**

(12) **EUROPEAN PATENT SPECIFICATION**

(45) Date of publication and mention
of the grant of the patent:
**22.07.2009 Bulletin 2009/30**

(51) Int Cl.:
**C08J 3/12** (2006.01)

(21) Application number: **04703464.0**

(22) Date of filing: **20.01.2004**

(86) International application number:
**PCT/JP2004/000394**

(87) International publication number:
**WO 2004/067609 (12.08.2004 Gazette 2004/33)**

(54) **FINE PARTICLES HAVING CONTROLLED DENSITY**

FEINE TEILCHEN MIT KONTROLLIERTER DICHTE

FINES PARTICULES A DENSITE CONTROLEE

(84) Designated Contracting States:
**DE GB**

(30) Priority: **31.01.2003 JP 2003023087**

(43) Date of publication of application:
**26.10.2005 Bulletin 2005/43**

(73) Proprietor: **Trial Corporation**
**Hadano-shi,**
**Kanagawa 257-0015 (JP)**

(72) Inventors:
• **SUGANO, Yuzuru**
**Kamakura-shi, Kanagawa 248-0027 (JP)**
• **SUSA, Kenzo**
**Nishitama-gun, Tokyo 190-0182 (JP)**

(74) Representative: **HOFFMANN EITLE**
**Patent- und Rechtsanwälte**
**Arabellastraße 4**
**81925 München (DE)**

(56) References cited:
**JP-A- 7 070 331**

EP 1 589 058 B1

## Description

Technical Field

The present invention relates to fine particles having controlled density.

Background Art

In recent years, there has been a demand for fine spherical particles of a synthetic polymer in various technical fields. There has also been a demand for a composite powder in which the surface of spherical particles is coated with various layers. Examples thereof include cosmetics in which spherical resin particles are mechanochemically coated with metal oxide fine particles and/or hydroxide fine particles (ref. Japanese Patent Application Laid-open No. 8-59433). There are also known capsule-type composite powders in which various types of fine particles such as a pigment are contained within polymer particles, such as, for example, composite particles in which a fine powder of titanium oxide or zinc oxide is dispersed within resin particles (ref. Japanese Patent Application Laid-open No. 9-30935), and composite particles in which a coloring pigment is dispersed within resin particles (ref. Japanese Patent Application Laid-open No. 10-231232). There has also been disclosed a process for producing a substantially spherical fine powder from a thermoplastic resin composition substantially comprising a thermoplastic resin and at least one type of filler (ref. Japanese Patent Application Laid-open No. 2001-114901). However, since these composite particles have a high specific gravity, when applied to an aqueous dispersion system they are susceptible to precipitating or settling, thus causing problems. In particular, in biologically-related technical fields, there is a strong desire for fine particles having a specific gravity close to 1.

JP-A-0 7-70331 teaches the production of polyester particles which comprise a polyester resin whose volume-average particle diameter is 0.5-100 μm. The interior of the particles has one or more voids filled with gas or liquid. The void percentage of the particles lies in the range 1-99 vol.%. The polyester particles may include a component such as a pigment, latex or carbon black.

Disclosure of Invention

An object of the present invention is to provide fine particles having a controlled density, the fine particles forming a stable dispersion in a dispersion medium comprising water as a primary component, and being less prone to precipitating or settling.

The object of the present invention has been accomplished by the following means. That is:

Item 1) Fine particles comprising at least one type of polymer and ferromagnetic powder as a filler, the fine particles having a density of 0.9 to 2.0 g/cm$^3$ and a volume average particle diameter of 0.01 μm to 1,000 μm.

Preferred embodiments of the fine particles of the present invention are listed below.

Item 2) Fine particles according to Item 1), wherein the volume average particle diameter is 5-1,000 μm.

Item 3) Fine particles according to Item 1) or 2), whose density is 0.95 to 1.5 g/cm$^3$.

Item 4) Fine particles according to Items 1) to 3), wherein the fine particles comprise a coating layer on the surface thereof.

Item 5) Fine particles according to Items 1) to 4), wherein the surface is coated with a biocompatible material.

Item 6) Fine particles according to Item 5), wherein the ferromagnetic powder is formed from a ferrite.

Item 7) Fine particles according to Items 2) to 6), wherein the polymer is thermoplastic.

Item 8) Fine particles according to Item 7), wherein the polymer has a density of less than 1.0 g/cm$^3$ and is an ethylene/vinyl acetate copolymer, polypropylene, high-pressure (low density) polyethylene, poly-1-butene or polyisobutylene.

In accordance with the present invention, there can be provided fine particles having controlled density that are resistant to precipitating or settling even when used with an aqueous dispersion system.

Best Mode for Carrying Out the Invention

The present invention is explained in detail below.

The polymer used in the fine particles having controlled density of the present invention may be of any type, but from the viewpoint of production it is preferable to use a thermoplastic resin. In this case, production can be carried out according to a production process for fine particles previously developed by the present inventors (ref. Japanese Patent Application Laid-open No. 2001-114901). That is, a composition comprising at least one type of thermoplastic resin and at least one type of filler selected as necessary is mixed with a dispersion medium that is incompatible with the composition while heating at a temperature equal to or higher than the melting point of the composition, thus dispersing the composition as fine particles, followed by cooling to easily give spherical fine particles having a volume average particle diameter of at least 0.01 μm and at most 1,000 μm (0.01 to 1,000 μm). The average particle diameter referred to here is based on a volume average.

Preferred examples of the thermoplastic resin include polyethylene, polypropylene, polyvinyl chloride, polystyrene, polyamides, particularly various types of nylon such as nylon 6, nylon 66, nylon 610, nylon 612, nylon 11, nylon 12, and nylon 46, polyesters such as polyethylene terephthalate, polycarbonate, polymethyl methacrylate, polytetrafluoroethylene, polyvinylidene fluoride, polyvinyl acetate, polyacetal, polysulfone, methyl acrylate/methyl methacrylate copolymer, acrylonitrile/styrene copolymer, ethylene/vinyl acetate copolymer (EVA), ethylene/acrylic acid copolymer, ethylene/propylene copolymer, ABS resin (acrylonitrile/butadiene/styrene copolymer), and a thermoplastic elastic substance such as styrene/butadiene copolymer.

The fine particles having controlled density of the present invention can be used in various applications. In particular, in fields in which consideration is given to environmental issues or fields in which consideration is given to biocompatibility, it is desirable to use a biodegradable resin as the polymer. With regard to the biodegradable resin, it is preferable to use a thermoplastic resin from the viewpoint of production; typical resins are fatty acid polyesters (including polylactic acid; the same applies below), specific biodegradable thermoplastic resins formed by chemically modifying natural raw materials, microbially produced plastics, and synthetic plastics, but they should not be construed as being limited thereto.

With regard to the biodegradable resin used in the present invention, it is particularly preferable to use an aliphatic polyester or a blend of two or more types of aliphatic polyesters.

The 'aliphatic polyester' referred to in the present invention means a polyester in which all of the carbon atoms of the molecule are connected as a single chain; the carbon atoms of the molecule may have a branched structure, but the molecule does not contain a cyclic structure. It may contain an aliphatic cyclic structure such as cyclohexane. The aliphatic polyester is produced on an industrial scale, and preferred aliphatic polyesters for carrying out the present invention include polylactic acid (PLA) and polyglycolic acid (PGA), which are formed by a ring-opening polymerization process, and a polyhydroxybutyrate/valerate copolymer (PHB/V), which is formed by a fermentation process.

The fine particles of the present invention include ferromagnetic powder as a filler. The density of the particles is 0.9 to 2.0, preferably 0.95 to 1.5, and particularly preferably 0.98 to 1.3.

Regardless of the presence or absence of a filler, when an aqueous dispersion medium is employed, the density is preferably 0.98 to 1.02. It is preferable to use fine particles having a density that is close to the density of the dispersion medium, and in many cases it is preferable for it to be equal to 1.0 or close to 1.01. The density of many fillers and inorganic coating layers is greater than 1. It is therefore preferable to select at least one type of polymer having a density of less than 1.0 for fine particles containing these fillers and fine particles having an inorganic coating layer.

When the density of the polymer constituting the particles is less than 1.0, it is preferable to combine it with a material having a density of greater than 1.0.

Examples of the polymer having a density of less than 1.0 include polypropylene (PP), ethylene/vinyl acetate copolymer (EVA), high-pressure (low density) polyethylene, poly-1-butene, and polyisobutylene.

In order to control the density, hollow fine particles having a specific gravity of less than 1 may be used. The hollow fine particles may be selected from various materials, but from the viewpoint of production it is preferable to use a material having a melting point that is higher than the melting point of the thermoplastic polymer resin by at least 10°C, and preferably by at least 300°C. Examples of such a material include inorganic materials such as silica, organic-inorganic hybrid materials such as an alkylsilica, heat-resistant organic materials such as polyimide, and carbon materials such as fullerene and carbon nanotubes. Among these, silica is preferably used.

The size of the hollow particles that can be used is equal to or less than the volume average particle diameter of the fine particles of the present invention, and is preferably equal to or less than one tenth of the volume average particle diameter.

Examples of materials having a density of greater than 1 include inorganic materials and, in particular, various types of metal oxide such as ferrite, titania, zirconia, silica, and alumina.

The fine particles of the present invention may include a filler, at least one part thereof being encapsulated within the particles. In this case, a part of the filler may be exposed on the surface of the particles. The filler preferably has the property of exhibiting or improving the mechanical, electrical, magnetic, optical, or thermal properties. The filler is at least one type of organic filler or inorganic filler, or a mixture of two or more of the same or different types, and is a component that can be mixed with a polymer resin. Such a filler includes materials that absorb or scatter ultraviolet rays, pigments, dyes, infrared absorbing agents, agents for absorbing electromagnetic waves or radiation, and various types of fluorescent material. Examples thereof include titanium oxide (titanium white), zinc oxide, iron oxide (colcothar, yellow iron oxide, iron black, superfine iron oxide particles), lead oxide, aluminum hydroxide, aluminum oxide, zirconium oxide, titanium nitride, zirconium nitride, selenium oxide, silicon carbide, silicon nitride, boron carbide, boron nitride, strontium aluminate, manganese-doped zinc silicate, cerium-doped yttrium silicate, and rare earth silicates. It is also possible to use two or more types of different fillers in combination as necessary. Although the filler is preferably contained within the polymer fine particles, a part or the entirety of the surface of the particles may be coated with the filler.

The filler used in the present invention includes ferromagnetic powder. One of the purposes for including (filling) ferromagnetic powder in spherical fine resin particles is to carry out unit operations such as stirring, mixing, control of the flow rate, separation, or valve operation by driving the fine particles in a microscopic region under various chemical environments by means of an external magnetic field. The ferromagnetic material referred to here means a magnetic material having spontaneous magnetization such as a ferromagnetic or a ferrimagnetic material. Such materials are diverse materials such as metals, alloys, intermetallic compounds, oxides, metal compounds, etc.

The amount of magnetic powder filler is preferably 1 to 90 wt % relative to the total amount of polymer, and more preferably 5 to 30 wt %.

With regard to the metal materials, Fe, Ni, and Co, which are transition metals, are representative, but alloys of these metals such as Fe-V, Fe-Cr, Fe-Ni, Fe-Co, Ni-Co, Ni-Cu, Ni-Zn, Ni-V, Ni-Cr, Ni-Mn, Co-Cr, Co-Mn, 50Ni50Co-V, and 50Ni50Co-Cr systems may be used. Among these, a system that includes Fe or Ni, which has a large saturation magnetic moment, is preferable, and an Fe-Ni system is particularly preferable. When a material having a large saturation magnetic moment is used, the above-mentioned object can be attained by a small amount of filler, and composite particles having a density defined by the present invention can be obtained easily. With regard to other metal materials, rare earth Gd and alloys thereof can be cited.

Examples of the intermetallic compounds include $ZrFe_2$, $HfFe_2$, $FeBe_2$, $REFe_2$ (RE = Sc, Y, Ce, Sn, Gd, Dy, Ho, Er, Tm), and $GdCo_2$. Examples thereof further include $RECo_5$ (RE = Y, La, Ce, Sm), $Sm_2Co_{17}$, $Gd_2O_{17}$, $Ni_3Mn$, $FeCa$, $FeNi$, $Ni_3Fe$, $CrPt_3$, $MnPt_3$, $FePd$, $FePd_3$, $Fe_3Pt$, $FePt$, $CoPt$, $CoPt_3$, and $Ni_3Pt$.

Examples of the oxide include magnetic oxides having a crystal structure of a spinel type, a garnet type, a perovskite type, a magnetoplumbite type, etc.

Examples of the spinel type include $MFe_2O_4$ (M = Mn, Fe, Co, Ni, Cu, Mg, Zn, $Li_{0.5}Fe_{0.5}$), $FeMn_2O_4$, $FeCo_2O_4$, $NiCo_2O_4$, and $\gamma$-$Fe_2O_3$. $\gamma$-$Fe_2O_3$ is an iron oxide called maghemite. This is different from $\alpha$-$Fe_2O_3$ (colcothar), which is known as a pigment, and is known as a material having a relatively low density (about 3.6 $g/cm^3$) and a large saturation magnetic moment, and is particularly preferable as the filler of the present invention.

As the garnet type oxide, rare earth iron garnet may be used. When represented by the general formula $R_3Fe_5O_{12}$, it is known that those in which R is Y, Sm, Zn, Gd, Tb, Dy, Ho, Er, Tm, Yb, or Lu exhibit ferrimagnetic properties. Among these, those with Y, Sm, Yb, Lu, etc. are preferable since the saturation magnetization is large. One with Y is particularly preferable since the density is low (5.17 $g/cm^3$).

Examples of the magnetoplumbite type oxide include $MF_{12}O_{19}$ (M = Ba, Sr, Ca, Pb, $Ag_{0.5}La_{0.5}$, $Ni_{0.5}La_{0.5}$), $M_2BaFe_{16}O_{27}$ (M = Mn, Fe, Ni, $Fe_{0.5}Zn_{0.5}$, $Mn_{0.5}Zn_{0.5}$), $M_2Ba_3Fe_{24}O_{41}$ (M = Co, Ni, Cu, Mg, $Co_{0.75}Fe_{0.25}$), and $M_2Ba_2Fe_{12}O_{22}$ (M = Mn, Co, Ni, Mg, Zn, $Fe_{0.25}Zn_{0.75}$).

Examples of the perovskite type oxide include $RFeO_3$ (R = a rare earth ion).

In addition, a boride ($Co_3B$, $Co_1B$, $Fe_3B$, $MnB$, $FeB$, etc.), an Al compound ($Fe_3Al$, $Cu_2MnAl$, etc.), a carbide ($Fe_3C$, $Fe_2C$, $Mn_3ZnC$, $Co_2Mn_2C$, etc.), a silicide ($Fe_3Si$, $Fe_5Si_3$, $Co_2MnSi$, etc.), a nitride ($Mn_4N$, $Fe_4N$, $Fe_8N$, $Fe_3NiN$, $F_3PtN$, $Fe_2N_{0.75}$. $Mn4N_{0.75}C_{0.25}$, $Mn_4N_{0.5}C_{0.5}$, $Fe_4N_{1-x}C_x$, etc.), a phosphide, an arsenic compound, an Sb compound, a Bi compound, a sulfide, an Se compound, a Te compound, a halogen compound, a rare earth element, etc. may be used as the metal compound.

Other magnetic materials are described in 'Kyojiseitai no Butsuri' (Physics of Ferromagnetic Materials) by Soushin Chikazumi, Shokabo Publishing Co., Ltd. (4, 1983, Fourth Edition).

Such a filler may be added to the fine particles of the present invention. That is, a material having the function of the above-mentioned filler and a low density is added as a density controlling agent. For example, a filler having a hollow structure may be added as the density controlling agent. Furthermore, when a filler is added to a polymer having a specific gravity of less than 1.0, a filler having a density of 1.0 or higher may be added as the density controlling agent.

The fine particles of the present invention may have a coating layer comprising a functional material on the surface thereof. The functional material has the property of exhibiting or improving the biochemical, mechanical, electrical, magnetic, optical, or thermal properties, and is at least one type of organic material, inorganic material, organic-inorganic composite material, or a mixture of two or more types of these materials of the same or different types. The functional material includes biocompatible materials, materials that absorb or scatter ultraviolet rays, pigments, dyes, infrared absorbing agents, agents for absorbing electromagnetic waves or radiation, and various types of fluorescent materials. The 'biocompatible material' referred to here in the present invention means a material that has no toxicity toward a living body and does not cause a biological reaction.

Preferred examples of the biocompatible material include hydroxyapatite, polysaccharides and derivatives thereof, dextran and derivatives thereof, a polymer material having a carboxyl group or an amino group, and a copolymer of a polyolefin and a polymer having the above-mentioned functional group. Examples of the inorganic material that can be used as the coating layer include metal oxides, metal borides, metal silicides, metal carbonates, metal sulfates, metal nitrides, metal carbides, and metal sulfides. Specific examples of the inorganic material include metals such as Ni, Cu, Cr, Al, gold, platinum, and silver, metal oxides such as titanium oxide (titanium white), zinc oxide, iron oxide (colcothar, yellow iron oxide, iron black, superfine iron oxide particles), lead oxide, aluminum oxide, zirconium oxide, selenium oxide, strontium aluminate, manganese-doped zinc silicate, cerium-doped yttrium silicate, and rare earth silicate, aluminum hydroxide, titanium nitride, zirconium nitride, silicon carbide, silicon nitride, boron carbide, and boron nitride.

The thickness of the coating layer is from the molecular order (about 1 nm) to a few microns, but an optimum thickness may be selected according to the type of functional material, the diameter of the fine particles, and the application field.

The fine particles of the present invention have a volume average particle diameter of at least 0.01 $\mu$m and at most 1,000 $\mu$m, preferably at least 0.1 $\mu$m and at most 500 $\mu$m, more preferably at least 1 $\mu$m and at most 1,000 $\mu$m, and particularly preferably at least 5 $\mu$m and at most 1,000 $\mu$m.

The fine particles of the present invention that include a magnetic powder have a volume average particle diameter of at least 5 $\mu$m and at most 1,000 $\mu$m, and preferably have an average particle diameter of at least 10 $\mu$m and at most 300 $\mu$m, so that they can be easily driven or collected by a magnet.

The fine particles of the present invention preferably have a shape factor (hereinafter, also called 'SF') of 100 to 150, more preferably 100 to 140, and particularly preferably 100 to 120. The shape factor SF is 100 in the case of a sphere; when the shape factor is closer to 100, the fine particles have a shape close to spherical, and the larger the shape factor, the more irregular the shape and the further it is from spherical.

$$ SF = \frac{(ML)^2}{A} \times \frac{100\pi}{4} $$

In the equation, ML denotes the maximum diameter of a projected image of the fine particles, and A denotes the projected area of the fine particles.

The shape factor SF can be determined by sampling fine particles that are to be measured and analyzing with an image analyzer a projected image of the fine particles taken by an optical microscope. A value obtained by averaging the values for 100 or more fine particles is defined as the shape factor SF.

The fine particles encapsulating a magnetic powder have a volume average particle diameter of 5 to 1,000 $\mu$m, and preferably in the range of 5 to 300 $\mu$m; all thereof preferably have a shape factor SF of 100 to 120, and more preferably 100 to 110.

The fine particles of the present invention may be applied in biologically related technical fields. Specifically, they may be employed as carriers for cell culture or absorbents agent for analysis of proteins, DNA, etc.

The surface of the fine particles of the present invention may be coated with a layer comprising calcium phosphate by dispersing or immersing the fine particles in an aqueous solution containing Ca ions and phosphate ions at a temperature of 30°C or higher for 12 hours or longer.

It is necessary for the above-mentioned aqueous solution to contain at least Ca ions and phosphate ions ($HPO_4^{2-}$). It is preferable to use as the aqueous solution a simulated body fluid containing Ca ions and phosphate ions.

It is necessary for the aqueous solution in which the fine particles are immersed to be in a supersaturated state with respect to calcium phosphate when the resin particles are immersed. In order to realize the supersaturated state, it is important to maintain the aqueous solution at a pH higher than neutral. When the pH decreases, since the solubility of calcium phosphate increases, there is no precipitation of crystals.

The concentration of Ca ions is preferably 1.0 (mM/L) or higher, and more preferably 2.0 to 7.5 (mM/L).

The concentration of phosphate ions is preferably 0.4 (mM/L) or higher, and more preferably 0.8 to 3.0 (mM/L).

When a simulated body fluid is used as the aqueous solution, a standard concentration aqueous solution may be used with a concentration of each ion (mM/L) in the simulated body fluid of $Ca^{2+}$: 2.5, $HPO_4^{2-}$: 1.0, $Na^+$: 142, $K^+$: 5.0, $Mg^{2+}$: 1.5, $Cl^-$: 147.8, $HCO_3^-$: 4.2, $SO_4^{2-}$: 0.5, and a $(CH_2OH)_3CNH_2$ buffer agent concentration of 50 (mM/L), or an aqueous solution with concentrations of 1 to 3 times the above concentrations may be used.

While the resin particles are being immersed, by maintaining the pH value of the aqueous solution at 7.2 to 8.0, and preferably 7.4 to 7.6, the temperature thereof at 30°C to 80°C, and preferably 36°C to 38°C, and the immersion time for 12 hours or longer, and preferably 3 to 10 days, the surface of the resin particles can be coated with a layer comprising calcium phosphate.

In accordance with the present invention, in the step of immersing the resin particles in the aqueous solution containing Ca ions and phosphate ions, it is preferable to suspend the resin particles in the aqueous solution. Suspending the resin particles enables uniform coating of the particles to be carried out. With regard to suspension means, for example, it is preferable to stir the aqueous solution by applying mechanical motion such as rotation or circulation. The stirring operation may be carried out intermittently.

Examples

Examples are described below, but the present invention should not be construed as being limited thereto.

(Example 1)

0.85 Kg of polypropylene having a specific gravity of 0.91 (Mitsui-Sumitomo Polypro W-531, manufactured by Sumitomo Chemical Co., Ltd.) and 0.15 g of a ferrite having a specific gravity of 3.5 ($Fe_2O_3$, QX440, manufactured by Toda Kogyo Corp.) were mixed well with 1.3 Kg of polyethylene glycol (P20000, manufactured by Sanyo Chemical Industries, Ltd.), and then further mixed in a twin shaft pressure kneader at 200°C while uniformly heating, thus dispersing fine particles of polypropylene-encapsulated ferrite. After the mixture thus obtained was cooled to about 150°C, it was mixed with 20 L of water as a dispersion medium to give a suspension of fine particles of polypropylene-encapsulated ferrite. After the target fine particles were separated by a centrifugation method and a filtration method, they were dried by heating to give substantially spherical polypropylene fine particles with 15% encapsulated ferrite and having a volume average particle diameter of 100 to 200 μm and a density of about 0.99 to 1.01. The shape factor SF was 110.

(Example 2)

The procedure of Example 1 was repeated except that 0.85 Kg of polyethylene vinyl acetate (EVA) having a specific gravity of 0.93 (Ultracen 541, manufactured by Tosoh Corporation) was used instead of 0.85 Kg of the polypropylene having a specific gravity of 0.91 (Mitsui-Sumitomo Polypro W-531, manufactured by Sumitomo Chemical Co., Ltd.), thus giving substantially spherical polyvinyl acetate (EVA) fine particles with 15% encapsulated ferrite and having a volume average particle diameter of 100 to 200 μm and a specific gravity of about 1.0 to 1.02. The shape factor was 110.

(Example 3)

200 mg of the polypropylene fine particles obtained in Example 1 was taken in a 50 mL sample bottle, to this was added 40 mL of an aqueous solution with a pH of 7.4 comprising various ions at concentrations (mM/L) of $Ca^{2+}$: 2.5, $HPO_4^{2-}$: 1.0, $Na^+$: 142, $K^+$: 5.0, $Mg^{2+}$: 1.5, $Cl^-$: 147.8, $HCO3^-$: 4.2, $SO_4^{2-}$: 0.5, and a $(CH_2OH)_3CNH_2$ buffer agent concentration of 50 (mM/L), and the mixture was shaken. This was immersed and stored in a constant-temperature oven at 36.5°C for 7 days. During this period, it was shaken 6 times, and the fine particles were dispersed and suspended in the aqueous solution. After 7 days had elapsed, the sample was separated by filtration and dried at room temperature. The surface of the particles thus obtained was coated with calcium phosphate of about 0.1 μm thickness. These particles were used as a carrier for cell culture.
Cells were cultured on the surface of the carrier having a buoyancy such that its specific gravity was close to the specific gravity of 1.01 of the culture solution. In order to collect the cells thus cultured, a magnet was provided on the outer wall of the culture oven, and the carrier that had been attracted toward the inner wall was pulled up from the solution by raising the magnet upward, and the carrier was collected together with the cells.

(Example 4)

The procedure of Example 3 was repeated except that 200 mg of the polyethylene vinyl acetate (EVA) fine particles was used instead of 200 mg of the polypropylene fine particles, and a carrier for cell culture was prepared. In Example 4, cells could be collected as in Example 3.

**Claims**

1.  Fine particles comprising at least one type of polymer and ferromagnetic powder as a filler, the fine particles having a density of 0.9 to 2.0 $g/cm^3$ and a volume average particle diameter of 0.01 μm to 1,000 μm.

2.  Fine particles according to Claim 1, wherein the volume average particle diameter is 5-1,000 μm.

3.  Fine particles according to Claim 1 or Claim 2, whose density is 0.95 to 1.5 $g/cm^3$.

4.  Fine particles according to any preceding claim, wherein the fine particles comprise a coating layer on the surface thereof.

5.  Fine particles according to Claim 4, wherein the surface is coated with a biocompatible material.

6.  Fine particles according to any preceding claim, wherein the ferromagnetic powder is formed from a ferrite.

7.  Fine particles according to any preceding claim, wherein the polymer is thermoplastic.

8.  Fine particles according to Claim 7, wherein the polymer has a density of less than 1.0 $g/cm^3$ and is an ethylene/vinyl acetate copolymer, polypropylene, high-pressure (low density) polyethylene, poly-1-butene or polyisobutylene.

**Patentansprüche**

1.  Feine Teilchen, umfassend mindestens einen Polymertyp und ferromagnetisches Pulver als Füllstoff, wobei die feinen Teilchen eine Dichte von 0,9 bis 2,0 $g/cm^3$ und einen mittleren Teilchenvolumendurchmesser von 0,01 bis 1.000 μm aufweisen.

2.  Feine Teilchen gemäss Anspruch 1, wobei der mittlere Teilchenvolumendurchmesser 5 bis 1.000 μm beträgt.

3.  Feine Teilchen gemäss Anspruch 1 oder 2, deren Dichte 0,95 bis 1,5 $g/cm^3$ beträgt.

4.  Feine Teilchen gemäss mindestens einem der vorhergehenden Ansprüche, wobei die feinen Teilchen eine Überzugsschicht auf ihrer Oberfläche umfassen.

**5.** Feine Teilchen gemäss Anspruch 4, wobei die Oberfläche mit einem biokompatiblen Material beschichtet ist.

**6.** Feine Teilchen gemäss mindestens einem der vorhergehenden Ansprüche, wobei das ferromagnetische Pulver aus Ferrit gebildet ist.

**7.** Feine Teilchen gemäss mindestens einem der vorhergehenden Ansprüche, wobei das Polymer thermoplastisch ist.

**8.** Feine Teilchen gemäss Anspruch 7, wobei das Polymer eine Dichte von weniger als 1,0 g/cm$^3$ aufweist und ein Ethylen/Vinylacetat-Copolymer, Polypropylen, Hochdruck-Polyethylen (niedriger Dichte), Poly-1-buten oder Polyisobutylen ist.


**Revendications**

**1.** Fines particules comprenant au moins un type de polymère et une poudre ferromagnétique comme charge, les fines particules ayant une densité de 0.9 à 2.0 g/cm$^3$ et un diamètre de particule moyen en volume de 0.01 $\mu$m à 1,000 $\mu$m.

**2.** Fines particules selon la revendication 1, dans lesquelles le diamètre de particule moyen en volume est de 5-1,000 $\mu$m.

**3.** Fines particules selon la revendication 1 ou la revendication 2, dont la densité est de 0.95 à 1.5 g/cm$^3$.

**4.** Fines particules selon l'une quelconque des revendications précédentes, dans lesquelles les fines particules comprennent une couche mince à la surface de celles-ci.

**5.** Fines particules selon la revendication 4, dans lesquelles la surface est couverte avec un matériau biocompatible.

**6.** Fines particules selon l'une quelconque des revendications précédentes, dans lesquelles la poudre ferromagnétique est formée à partir d'une ferrite.

**7.** Fines particules selon l'une quelconque des revendications précédentes, dans lesquelles le polymère est thermoplastique.

**8.** Fines particules selon la revendication 7, dans lesquelles le polymère a une densité inférieure à 1.0 g/cm$^3$ et est copolymère d'éthylène/d'aéétate de vinyl, polypropylène, polyéthylène haute pression (faible densité), poly-1-butène ou polyisobutylène.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8059433 A
- JP 9030935 A
- JP 10231232 A
- JP 2001114901 A
- JP 0770331 A

**Non-patent literature cited in the description**

- **Soushin Chikazumi.** Kyojiseitai no Butsuri. Shokabo Publishing Co., Ltd, April 1983